(19) Europäisches Patentamt
European Patent Office
Office européen des brevets

(11) EP 4 804 255 A1

(12) EUROPEAN PATENT APPLICATION
published in accordance with Art. 153(4) EPC

(43) Date of publication:
**09.09.2026 Bulletin 2026/37**

(21) Application number: **24885329.3**

(22) Date of filing: **27.09.2024**

(51) International Patent Classification (IPC):
***H01M 4/62*** (2006.01) ***H01M 4/36*** (2006.01)
***H01M 4/38*** (2006.01) ***H01M 4/133*** (2010.01)
***H01M 4/134*** (2010.01) ***H01M 4/587*** (2010.01)

(52) Cooperative Patent Classification (CPC):
**H01M 4/133; H01M 4/134; H01M 4/36; H01M 4/38; H01M 4/587; H01M 4/62;** Y02E 60/10

(86) International application number:
**PCT/JP2024/034582**

(87) International publication number:
**WO 2025/094552 (08.05.2025 Gazette 2025/19)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **31.10.2023 JP 2023186092**

(71) Applicant: **Panasonic Energy Co., Ltd.**
**Moriguchi-shi, Osaka 570-8511 (JP)**

(72) Inventor: **URAKI, Yoko**
**kadoma-shi, Osaka 571-0057 (JP)**

(74) Representative: **Novagraaf International SA**
**Chemin de l'Echo 3**
**1213 Onex, Geneva (CH)**

# (54) NEGATIVE ELECTRODE FOR SECONDARY BATTERIES, AND SECONDARY BATTERY

(57) Disclosed is a negative electrode (12) for secondary batteries, which includes a negative electrode current collector (40) and a negative electrode mixture layer (41) that is formed on the surface of the negative electrode current collector (40). This negative electrode (12) for secondary batteries is characterized in that: the negative electrode mixture layer (41) includes, as a negative electrode active material, a carbon material and an Si-containing material; the negative electrode mixture layer (41) includes, as a conductive agent, a first conductive agent that has a G/D ratio of not less than 20 but less than 65 as determined by Raman spectroscopic measurement, and a second conductive agent that has a G/D ratio of not less than 0.7 but less than 20 as determined by Raman spectroscopic measurement; and the ratio (W2/W1) of the mass (W2) of the second conductive agent to the mass (W1) of the first conductive agent is less than 2.0.

Figure 1

10
24
26
23
17
27
25
16
28
20
22
18
12
11
41 40 41
31 30 31
11
12
13
14
13
13
21
19



Processed by Luminess, 75001 PARIS (FR)

## Description

### TECHNICAL FIELD

The present disclosure relates to a negative electrode for a secondary battery, and to a secondary battery.

### BACKGROUND

In recent years, from the viewpoint of increased capacity of a secondary battery, there have been studies for the use of a Si-containing material which contains silicon (Si), which can occlude a larger amount per unit mass of lithium ions in comparison to carbon-based active materials such as graphite, as a negative electrode active material contained in a negative electrode mixture layer. Patent Literature 1 discloses a secondary battery containing a carbon nanotube as a conductive agent in the negative electrode mixture layer.

### CITATION LIST

### PATENT LITERATURE

Patent Literature 1: WO 2017/007013

### SUMMARY

Because the Si-containing material has a larger change of volume (expansion and contraction) due to the occlusion of the lithium ions in comparison to the carbon-based active materials, there is a problem in that, when charging and discharging are repeated, an electrically conductive path in the negative electrode mixture layer containing the Si-containing material is cut due to the large change of the volume of the Si-containing material, and charge/discharge cycle characteristics tend to be reduced.

According to one aspect of the present disclosure, there is provided a negative electrode for a secondary battery, the negative electrode comprising: a negative electrode current collector; and a negative electrode mixture layer formed on a surface of the negative electrode current collector, wherein the negative electrode mixture layer contains, as a negative electrode active material, a carbon material and a Si-containing material, the negative electrode mixture layer contains, as a conductive agent, a first conductive agent having a G/D ratio, obtained by Raman spectroscopy, of greater than or equal to 20 and less than 65, and a second conductive agent having a G/D ratio, obtained by the Raman spectroscopy, of greater than or equal to 0.7 and less than 20, and a ratio (W2/W1) of a mass of the second conductive agent (W2) to a mass of the first conductive agent (W1) is less than 2.0.

According to another aspect of the present disclosure, there is provided a secondary battery comprising: the negative electrode described above; a positive electrode; and an electrolyte.

According to a negative electrode for a secondary battery of an aspect of the present disclosure, charge/-discharge cycle characteristics of the secondary battery can be improved.

### BRIEF DESCRIPTION OF DRAWINGS

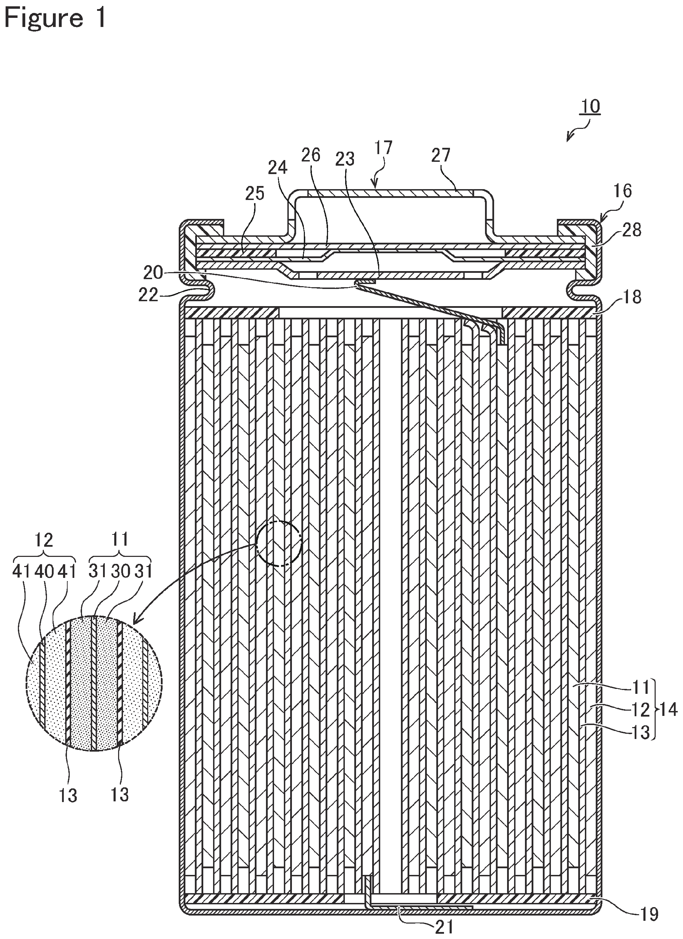

FIG. 1 is a cross-sectional diagram along an axial direction of a secondary battery according to an embodiment of the present disclosure.

### DESCRIPTION OF EMBODIMENTS

A secondary battery according to an embodiment of the present disclosure will now be described in detail with reference to the drawing. Configurations obtained by selectively combining constituent elements of a plurality of embodiments and alternative configurations described below are within the scope of the present disclosure.

In the following, a circular cylindrical battery in which an electrode assembly 14 of a wound type is housed in a housing can 16 having a circular cylindrical shape with a bottom will be exemplified as the secondary battery, but the housing member of the battery is not limited to the housing can of the circular cylindrical shape. The secondary battery according to the present disclosure may alternatively be, for example, a polygonal battery having a polygonal housing can, a coin-shape battery having a coin-shape housing can, or a pouch-type battery having a housing member formed from a laminated sheet including a metal layer and a resin layer. In addition, the electrode assembly is not limited to the wound type, and may alternatively be an electrode assembly of a layered type in which a plurality of positive electrodes and a plurality of negative electrodes are alternately layered with a separator therebetween.

FIG. 1 is a cross-sectional diagram of a secondary battery 10 according to an embodiment of the present disclosure. As illustrated in FIG. 1, the secondary battery 10 comprises the electrode assembly 14 of the wound type, an electrolyte, and the housing can 16 which houses the electrode assembly 14 and the electrolyte. The electrode assembly 14 comprises a positive electrode 11, a negative electrode 12, and a separator 13, and has a wound structure in which the positive electrode 11 and the negative electrode 12 are wound in a spiral shape with the separator 13 therebetween. The housing can 16 is a metal container having a circular cylindrical shape with a bottom and having one end side in an axial direction opened, and the opening of the housing can 16 is blocked by a sealing assembly 17. In the following, for the convenience of the description, the side of the sealing assembly 17 of the battery will be referred to as an "upper side", and the side of the bottom of the housing can 16 will be referred to as a "lower side".

The electrolyte has ion conductivity (for example, lithium ion conductivity). The electrolyte may be a liquid-state electrolyte (electrolyte solution) or a solid electrolyte.

The liquid-state electrolyte (electrolyte solution) contains a non-aqueous solvent and an electrolyte salt dissolved in the non-aqueous solvent. For the non-aqueous solvent, for example, esters, ethers, nitriles, amides, or a mixture solvent of two or more of these solvents may be employed. Examples of the non-aqueous solvent include ethylene carbonate (EC), ethylmethyl carbonate (EMC), dimethyl carbonate (DMC), diethyl carbonate (DEC), and a mixture solvent of these solvents. The non-aqueous solvent may include a halogen-substituted product in which at least a part of hydrogens of the solvent described above is substituted with a halogen atom such as fluorine (for example, fluoroethylene carbonate or the like). For the electrolyte salt, for example, a lithium salt such as $LiPF_6$ is employed.

As the solid electrolyte, for example, there may be employed a solid-state or gel-state polymer electrolyte, an inorganic solid electrolyte, or the like. For example, the polymer electrolyte contains a lithium salt and a matrix polymer, or contains a non-aqueous solvent, the lithium salt, and the matrix polymer. As the matrix polymer, for example, a polymer material which absorbs the non-aqueous solvent and forms a gel is used. As the polymer material, there may be exemplified, for example, a fluororesin, an acrylic resin, a polyether resin, or the like. As the inorganic solid electrolyte, for example, materials known in the field of an all-solid-state lithium ion secondary battery or the like (such as, for example, an oxide-based solid electrolyte, a sulfide-based solid electrolyte, a halide-based solid electrolyte) may be employed.

The positive electrode 11, the negative electrode 12, and the separator 13 forming the electrode assembly 14 are each a band-shaped, elongated member, and are wound in the spiral shape, so as to be alternately layered in a radial direction of the electrode assembly 14. The negative electrode 12 is formed in a size slightly larger than the positive electrode 11 in order to prevent precipitation of lithium. That is, the negative electrode 12 is formed to be longer in a length direction and in a width direction than the positive electrode 11. The separator 13 is formed in a size slightly larger at least than the positive electrode 11, and two separators 13 are disposed, for example, to sandwich the positive electrode 11. The electrode assembly 14 comprises a positive electrode lead 20 connected to the positive electrode 11 by welding or the like, and a negative electrode lead 21 connected to the negative electrode 12 by welding or the like.

Insulating plates 18 and 19 are disposed respectively above and below the electrode assembly 14. In the illustrated example structure of FIG. 1, the positive electrode lead 20 extends through a through hole of the insulating plate 18 toward the side of the sealing assembly 17, and the negative electrode lead 21 extends to the side of the bottom of the housing can 16 through an outer side of the insulating plate 19. The positive electrode lead 20 is connected to a lower surface of an internal terminal plate 23 of the sealing assembly 17 by welding or the like, and a cap 27 which is a top plate of the sealing assembly 17 electrically connected to the internal terminal plate 23 serves as a positive electrode terminal. The negative electrode lead 21 is connected to an inner surface of the bottom of the housing can 16 by welding or the like, and the housing can 16 serves as a negative electrode terminal.

A gasket 28 is provided between the housing can 16 and the sealing assembly 17, so as to secure hermiticity inside the battery. The housing can 16 has a groove portion 22 in which a part of a side surface portion is projected toward an inner side, and which supports the sealing assembly 17. The groove portion 22 is desirably formed in an annular shape along a circumferential direction of the housing can 16, and supports the sealing assembly 17 with the upper surface thereof. The sealing assembly 17 is fixed at an upper part of the housing can 16 by the groove portion 22 and an opening end of the housing can 16 crimped with respect to the sealing assembly 17.

The sealing assembly 17 has a structure in which the internal terminal plate 23, a lower vent member 24, an insulating member 25, an upper vent member 26, and the cap 27 are layered in this order from the side of the electrode assembly 14. The members of the sealing assembly 17 have, for example, a circular disk shape or a ring shape, and members other than the insulating member 25 are electrically connected to each other. The lower vent member 24 and the upper vent member 26 are connected to each other at respective center parts, and the insulating member 25 interposes between peripheral parts of the vent members. When an internal pressure of the battery increases due to abnormal heat generation, the lower vent member 24 deforms to press the upper vent member 26 upward toward the cap 27 and ruptures, and a current path between the lower vent member 24 and the upper vent member 26 is shut out. When the internal pressure further increases, the upper vent member 26 ruptures, and gas is exhausted from an opening of the cap 27.

The positive electrode 11, the negative electrode 12, and the separator 13 forming the electrode assembly 14 will now be described in detail. In particular, the negative electrode 12 will be described in detail.

[Positive Electrode]

The positive electrode 11 comprises a positive electrode current collector 30 and a positive electrode mixture layer 31 disposed on the positive electrode current collector 30. For the positive electrode current collector 30, there may be employed a foil of a metal which is stable within a potential range of the positive electrode 11 such as aluminum and an aluminum alloy, a film on a surface of which the metal is disposed, or the like. The positive electrode mixture layer 31 contains a positive electrode active material, a conductive agent, and a binder. The positive electrode 11 can be produced, for example, by applying a positive electrode mixture slurry including the positive electrode active material, the conductive agent, and the binder on the positive electrode current collector 30, drying the applied film, and compressing the dried film, to thereby form the positive electrode mixture layers 31 on both surfaces of the positive electrode current collector 30.

The positive electrode mixture layer 31 contains, as the positive electrode active material, a lithium-metal composite oxide of a particulate form. The lithium-metal composite oxide is a composite oxide containing, in addition to Li, a metal element such as Co, Mn, Ni, Al, and the like. The metal element forming the lithium-metal composite oxide is, for example, at least one element selected from Mg, Al, Ca, Sc, Ti, V, Cr, Mn, Fe, Co, Ni, Cu, Zn, Ga, Ge, Y, Zr, Sn, Sb, W, Pb, and Bi. Of these elements, the lithium-metal composite oxide desirably contains at least one element selected from Co, Ni, Al, and Mn. Examples of the desirable composite oxide include a lithium-metal composite oxide containing Ni, Co, and Mn, and a lithium-metal composite oxide containing Ni, Co, and Al.

The lithium-containing composite oxide is, for example, a secondary particle formed by aggregation of a plurality of primary particles. A volume-based median diameter (D50) of the composite oxide is not particularly limited, and, as an example, is greater than or equal to 3 μm and less than or equal to 30 μm, or is desirably greater than or equal to 5 μm and less than or equal to 25 μm. When the composite oxide is the secondary particle formed by aggregation of primary particles, D50 of the composite oxide refers to D50 of the secondary particle. D50 refers to a particle diameter at which an accumulation of frequencies in a volume-based granularity distribution reaches 50% from the lower particle diameter side, and is also called a middle size. The granularity distribution of the composite oxide can be measured using a granularity distribution measurement apparatus of a laser diffraction type (for example, MT3000II manufactured by MicrotracBEL corporation), and using water as a dispersion medium (this is similarly applicable to the case of the negative electrode active material).

An average particle diameter of the primary particles forming the lithium-containing composite oxide is, for example, greater than or equal to 0.05 μm and less than or equal to 1 μm. The average particle diameter of the primary particles is calculated by averaging diameters of circumscribing circles of primary particles extracted through analysis of a scanning electron microscope (SEM) image of a cross section of the secondary particle.

As the conductive agent contained in the positive electrode mixture layer 31, there may be exemplified carbon materials such as carbon black such as acetylene black and Ketjenblack, graphite, carbon nanotubes (CNT), carbon nanofiber, graphene or the like. As the binder contained in the positive electrode mixture layer 31, there may be exemplified a fluororesin such as polytetrafluoroethylene (PTFE), polyvinylidene fluoride (PVDF), or the like, polyacrylonitrile (PAN), polyimide, an acrylic resin, polyolefin, or the like. Alternatively, these resins may be employed along with carboxymethylcellulose (CMC) or a salt thereof, polyethylene oxide (PEO), or the like.

[Negative Electrode]

The negative electrode 12 comprises a negative electrode current collector 40, and a negative electrode mixture layer 41 formed on a surface of the negative electrode current collector 40. For the negative electrode current collector 40, there may be employed a foil of a metal which is stable within a potential range of the negative electrode 12 such as copper or the like, a film on a surface of which the metal is placed, or the like. No particular limitation is imposed on a thickness of the negative electrode current collector 40, but, from the viewpoint of balancing between a strength of the negative electrode 12 and reduction of a weight of the negative electrode 12, the thickness is desirably greater than or equal to 1 μm and less than or equal to 50 μm, and is more desirably greater than or equal to 5 μm and less than or equal to 20 μm.

The negative electrode mixture layer 41 contains, as a negative electrode active material, a carbon material and a Si-containing material. As will be described later in detail, the negative electrode mixture layer 41 further contains, as a conductive agent, a first conductive agent having a G/D ratio, obtained by Raman spectroscopy, of greater than or equal to 20 and less than 65, and a second conductive agent having a G/D ratio, obtained by the Raman spectroscopy, of greater than or equal to 0.7 and less than 20.

The negative electrode 12 can be produced, by example, by applying a negative electrode mixture slurry, which is prepared by mixing a negative electrode active material including the carbon material and the Si-containing material, conductive agents such as the first conductive agent and the second conductive agent, and the like, on the negative electrode current collector 40, drying the applied film, and rolling the dried film, to thereby form the negative electrode mixture layer 41 on the surface of the negative electrode current collector 40.

The carbon material is, for example, at least one material selected from the group consisting of natural graphite,

artificial graphite, soft carbon, and hard carbon. Desirably, of these, at least artificial graphite such as massive artificial graphite (MAG) and graphitized meso-phase carbon microbeads (MCMB), natural graphite such as flaky graphite, massive graphite, and amorphous graphite, or a mixture of these is employed. The volume-based median diameter (D50) of the carbon material is, for example, greater than or equal to 1 μm and less than or equal to 30 μm, and is desirably greater than or equal to 5 μm and less than or equal to 25 μm.

In addition, the carbon material desirably contains a first carbon material and a second carbon material having different BET specific surface areas from each other. The BET specific surface area of the first carbon material is, for example, greater than or equal to 0.9 $m^2/g$ and less than or equal to 6.5 $m^2/g$, and the BET specific surface area of the second carbon material is, for example, greater than 2.5 $m^2/g$ and less than or equal to 8.0 $m^2/g$. In general, a carbon material with a smaller BET specific surface area results in lower occurrence of a reaction with the electrolyte during charging and discharging, and thus tends to have improved charge/discharge cycle characteristics. On the other hand, a smaller BET specific surface area of the carbon material means reduced acceptance of lithium ions, and thus, may result in reduced input characteristics of the battery. In consideration of this, by employing in a combined manner the first carbon material and the second carbon material having different BET specific surface areas from each other as the carbon material, it is possible to improve the charge/discharge cycle characteristics while securing the input characteristics of the battery. The BET specific surface area is measured according to the BET method (nitrogen adsorption method) described in JIS R1626.

The Si-containing material may be any material which contains Si, and examples include a silicon alloy, a silicon compound, and a composite material containing Si. Of these, the composite material containing Si is desirable. The volume-based median diameter (D50) of the composite material is in general smaller than the volume-based median diameter (D50) of graphite. The volume-based median diameter (D50) of the composite material is, for example, greater than or equal to 1 μm and less than or equal to 15 μm. As the Si-containing material, one material may be used, or two or more materials may be used in combination.

A content of the Si-containing material is desirably greater than or equal to 10 mass% with respect to the total mass of the negative electrode mixture layer 41, is more desirably greater than or equal to 15 mass%, and is further desirably greater than or equal to 20 mass%. By setting the content of the Si-containing material with respect to the total mass of the negative electrode mixture layer 41 to greater than or equal to 20 mass%, it is possible to realize an increased capacity of the battery. Further, the content of the Si-containing material is desirably less than or equal to 60 mass% with respect to the total mass of the negative electrode mixture layer 41, is more desirably less than or equal to 55 mass%, and is further desirably greater than or equal to 40 mass%. The Si-containing material has a larger change of volume (expansion and contraction) during charging and discharging in comparison to the carbon material. Because of this, when the content of the Si-containing material exceeds 60 mass%, the electrically conductive path in the negative electrode mixture layer 41 containing the Si-containing material tends to be easily cut, possibly resulting in progression of isolation of the Si-containing material and reduction of the charge/discharge cycle characteristics of the battery. Therefore, the content of the Si-containing material is desirably greater than or equal to 10 mass% and less than or equal to 60 mass% with respect to the total mass of the negative electrode mixture layer 41, is more desirably greater than or equal to 15 mass% and less than or equal to 55 mass%, and is further desirably greater than or equal to 20 mass% and less than or equal to 50 mass%.

A desirable Si-containing material is a composite particle including an ion conductive phase and a Si phase dispersed in the ion conductive phase. The Si phase is formed by Si being dispersed in a small particle form. In addition, in the composite particle, an electrically conductive layer covering a part of a surface of the ion conductive phase may be formed. The electrically conductive layer is formed from a material having a higher electrical conductivity than the ion conductive phase, and forms a superior electrically conductive path in the negative electrode mixture layer 41. The electrically conductive layer includes, for example, electrically conductive carbon, and covers an area of greater than or equal to 30% and less than or equal to 70% of the surface of the ion conductive phase. The coverage of the electrically conductive layer can be determined through, for example, X-ray photoelectron spectroscopy (XPS).

The ion conductive phase is a continuous phase formed from a group of particles smaller than the Si phase described above. The ion conductive phase is, for example, at least one selected from the group consisting of a silicate phase, a carbon phase, a silicide phase, and a silicon oxide phase.

From the viewpoint of high lithium ion conductivity or the like, for example, the silicate phase desirably contains at least one element selected from lithium, sodium, potassium, rubidium, cesium, francium, beryllium, magnesium, calcium, strontium, barium, and radium. Of these, from the viewpoint of high lithium ion conductivity or the like, the silicate phase desirably is a silicate phase containing lithium (hereinafter also referred to as "lithium silicate phase").

The lithium silicate phase is, for example, represented by formula: $Li_{2z}SiO_{2+z}$ (wherein $0<z<2$). From the viewpoints of stability, ease of production, lithium ion conductivity, and the like, z desirably satisfies the relationship $0<z<1$, and is more desirably 1/2 ($z=1/2$).

An example of a desirable composite material containing Si is a composite particle having a sea-island structure in which small Si is approximately uniformly dispersed in an amorphous silicon oxide phase, and which is represented by a general formula $SiO_x$ (wherein $0<x\leq2$) as a whole. The primary composition of the silicon oxide may be silicon dioxide. A

content ratio of oxygen with respect to Si (x) is, for example, $0.5 \leq x < 2.0$, and is desirably $0.8 \leq x \leq 1.5$.

A content of the Si phase forming the composite particle is, for example, greater than or equal to 30 mass% and less than or equal to 80 mass%. The content of the Si phase can be measured by Si-NMR. The measurement conditions are, for example, as follows. Measurement apparatus: Solid-state nuclear magnetic resonance spectrum measurement apparatus (INOVA-400) manufactured by Varian

Probe: Varian 7mm CPMAS-2
MAS: 4.2 kHz
MAS speed: 4 kHz
Pulse: DD (45° pulse + signal reading time 1H decouple)
Repetition time: 1200 sec
Observation width: 100 kHz
Observation center: around -100 ppm
Signal reading time: 0.05 sec
Number of integrations: 560
Amount of sample: 207.6 mg

A crystallite size of the Si phase of the composite particle is, for example, greater than or equal to 10 nm and less than or equal to 30 nm. The crystallite size of the Si phase is calculated by Scherrer equation from a full width at half width of an analysis peak belonging to a Si (111) plane of an X-ray diffraction pattern of the Si phase.

Desirably, in the Si-containing material, a ratio (V1/V2) of a volume (V1) at a charged state with respect to a volume (V2) at a discharged state of less than or equal to 2.1. However, when the value of (V1/V2) is too small, there is a tendency of reduced battery capacity. Therefore, the value of (V1/V2) of the Si-containing material is desirably greater than or equal to 1.5, and is more desirably greater than or equal to 1.6. An example of a desirable range of (V1/V2) of the Si-containing material is greater than or equal to 1.5 and less than or equal to 2.1, and a more desirable range is greater than or equal to 1.6 and less than or equal to 2.0. When (V1/V2) of the Si-containing material is within these ranges, high capacity and superior cycle characteristics can both be easily achieved.

In the present disclosure, the ratio (V1/V2) of the volume (V1) at the charged state to the volume (V2) at the discharged state of the silicon-containing material is measured through the following method.

(1) A battery to be evaluated is dismantled, and the negative electrode plate is taken out. Using metal Li as a counter electrode and an ion liquid as the electrolyte solution, a single-electrode cell in a state in which a particle cross section of the silicon-containing material is exposed is produced.
(2) Under a temperature environment of 25°C, after the single-electrode cell is charged with 0.002C until the cell voltage reaches 5 mV, the cell is discharged with 0.05C until the cell voltage becomes 1.0 V, and the particle cross section of the silicon-containing material is observed in-situ with an SEM.
(3) From a change of the particle cross sectional area of the silicon-containing material, a particle volume (V1) of the silicon-containing material in the charged state and a particle volume (V2) of the silicon-containing material in the discharged state are determined, and the ratio (V1/V2) is calculated.

As described, the negative electrode mixture layer 41 contains, as the conductive agent, a first conductive agent having a G/D ratio, obtained by Raman spectroscopy, of greater than or equal to 20 and less than 65, and a second conductive agent having a G/D ratio, obtained by the Raman spectroscopy, of greater than or equal to 0.7 and less than 20. The G/D ratio is a ratio of a peak intensity of a G-band (greater than or equal to 1550 $cm^{-1}$ and less than or equal to 1600 $cm^{-1}$) to a peak intensity of a D-band (greater than or equal to 1300 $cm^{-1}$ and less than or equal to 1350 $cm^{-1}$) in the Raman spectroscopic spectrum. A conductive agent having a high G/D ratio can be considered to have a small number of defects and high crystallinity.

The Raman spectroscopic spectrum of the conductive agent can be measured using a Raman spectroscopy apparatus (for example, NRS-5500 manufactured by JASCO Corporation). The Raman spectroscopic spectrum of the conductive agent is measured by fractionating, on a slide, a dispersion liquid in which the conductive agent is dispersed, and measuring a sample produced by flattening the dispersion liquid using a spatula. The measurement conditions are, for example, as follows.

Measurement time: 5 seconds
Number of integrations: 2 times
Neutral density filter OD: 0.3
Objective lens magnification: 100 times
Measurement range: greater than or equal to 950 $cm^{-1}$ and less than or equal to 1900 $cm^{-1}$

As described, the Si-containing material has a larger change of volume (expansion and contraction) during charging and discharging, in comparison to the carbon material. As such, when the negative electrode mixture layer 41 contains the Si-containing material as the negative electrode active material, as charging and discharging are repeated, isolation of the Si-containing material may progress, and the charge/discharge cycle characteristics of the battery may be reduced. As a result of studies, the present inventors have found that the charge/discharge cycle characteristics of the battery are specially improved with a configuration in which the negative electrode mixture layer 41 contains, as a conductive agent, a first conductive agent having a G/D ratio of greater than or equal to 20 and less than 65, and a second conductive agent having a G/D ratio of greater than or equal to 0.7 and less than or 20, and a ratio (W2/W1) of a mass of the second conductive agent (W2) to a mass of the first conductive agent (W1) is less than 2.0. Although the detailed mechanism is yet unknown, it can be deduced that, by containing two kinds of conductive agents having different G/D ratios and setting the mixture ratio of the first conductive agent and the second conductive agent to a predetermined range, a strong electrically conductive path is formed between the carbon material and the Si-containing material serving as the negative electrode active material, and it becomes difficult for the electrically conductive path to be cut even when there is a change in volume of the Si-containing material.

In the configuration in which the negative electrode mixture layer 41 contains, as the conductive agent, only the first conductive agent having the G/D ratio of greater than or equal to 20 and less than 65, although the improvement of the charge/discharge cycle characteristics of the battery is sufficient, viscosity of the negative electrode slurry is increased, resulting in reduction in processability. The first conductive agent can form a relatively long electrically conductive path between the negative electrode active materials. However, the first conductive agent tends to have a small contact area with the negative electrode active material, and thus, the electrically conductive path formed by the first conductive agent tends to be easily cut due to the change of volume of the Si-containing material. On the other hand, in the configuration in which the negative electrode mixture layer 41 contains, as the conductive agent, only the second conductive agent having the G/D ratio of greater than or equal to 0.7 and less than 20, the improvement of the charge/discharge cycle characteristics of the battery is not sufficient. The second conductive agent tends to be placed to cover a part of the surface of the negative electrode active material, and thus has a large contact area with the negative electrode active material. However, the electrically conductive path formed by the second conductive agent has a relatively short length, and tends to be easily cut due to the change of volume of the Si-containing material. That is, when the negative electrode mixture layer 41 contains, as the conductive agent, the first conductive agent having the G/D ratio of greater than or equal to 20 and less than 65, and the second conductive agent having the G/D ratio of greater than or equal to 0.7 and less than 20, it is possible to form a relatively long electrically conductive path while securing the contact area between the negative electrode active material and the conductive agent, and to suppress the increase in viscosity of the negative electrode slurry at the same time. Here, the G/D ratio is used as an index for indicating the characteristics of the conductive agent. This is because the present inventors have found that there is very close correlation relationship between the G/D ratio of the conductive agent and the charge/discharge cycle characteristics of the battery.

The first conductive agent and the second conductive agent are desirably carbon nanotubes (CNT). As the carbon nanotube, there may be exemplified a single-walled carbon nanotube (SWCNT) and a multi-walled carbon nanotube (MWCNT) including a double-walled carbon nanotube. The single-walled carbon nanotube (SWCNT) is a carbon nanostructure in which one layer of a graphene sheet forms one circular tubular shape, and the multi-walled carbon nanotube is a carbon nanostructure in which two or more layers of the graphene sheet are layered in a concentric circular shape to form one circular cylindrical shape. The graphene sheet refers to a layer in which carbon atoms of sp2 hybrid orbit forming the crystal of graphite are positioned at vertices of a regular hexagon. No particular limitation is imposed on the shape of the carbon nanotube. For example, the carbon nanotubes may have various forms including a needle shape, a circular cylindrical tube shape, a fishbone (or cup-stacked) shape, a playing card (platelet) shape, and a coil shape. From the viewpoint of satisfying the above-described ranges of the G/D ratio, the first conductive agent is desirably the single-walled carbon nanotube, and the second conductive agent is desirably the multi-walled carbon nanotube. In the following, a configuration will be exemplified in which the first conductive agent and the second conductive agent are carbon nanotubes.

The ratio (W2/W1) of the mass of the second conductive agent in the negative electrode mixture layer 41 (W2) to the mass of the first conductive agent in the negative electrode mixture layer 41 (W1) is desirably greater than or equal to 0.01, is more desirably greater than or equal to 0.1, and is further desirably greater than or equal to 0.2. When the ratio (W2/W1) is greater than or equal to 0.01, it becomes easy to secure the contact area between the negative electrode active material and the conductive agent, and the charge/discharge cycle characteristics of the battery can be further improved. In addition, when the ratio (W2/W1) is less than 0.01, the viscosity of the negative electrode mixture slurry may become too large, resulting in a risk in that the negative electrode mixture layer 41 cannot be formed. In addition, it is sufficient that the ratio (W2/W1) is less than 2.0, but the ratio (W2/W1) is desirably less than or equal to 1.5, and is more desirably less than or equal to 1.0. When the ratio (W2/W1) is greater than or equal to 2.0, the length of the electrically conductive path formed by the conductive agent tends to become too short, and the charge/discharge cycle characteristics of the battery cannot be sufficiently improved. Thus, the ratio (W2/W1) is desirably greater than or equal to 0.01 and less than 2.0, is more desirably

greater than or equal to 0.1 and less than or equal to 1.5, and is further desirably greater than or equal to 0.2 and less than or equal to 1.0.

A total (W1+W2) of the mass of the first conductive agent (W1) and the mass of the second conductive agent (W2) is desirably greater than or equal to 0.01 mass% with respect to a total mass of the negative electrode mixture layer 41, is more desirably greater than or equal to 0.02 mass%, and is further desirably greater than or equal to 0.03 mass%. When the sum (W1+W2) is greater than or equal to 0.01 mass%, a superior electrically conductive path can be formed in the negative electrode mixture layer 41, and the charge/discharge cycle characteristics of the battery can be further improved. Further, the sum (W1+W2) is desirably less than or equal to 0.8 mass% with respect to the total mass of the negative electrode mixture layer 41, is more desirably less than or equal to 0.7 mass%, and is further desirably less than or equal to 0.6 mass%. When the sum (W1+W2) exceeds 0.8 mass%, the amount of the negative electrode active material in the negative electrode mixture layer 41 may be reduced, possibly resulting in reduction of the battery capacity. Thus, the sum (W1+W2) is desirably greater than or equal to 0.01 mass% and less than or equal to 0.8 mass% with respect to the total mass of the negative electrode mixture layer 41, is more desirably greater than or equal to 0.02 mass% and less than or equal to 0.7 mass%, and is further desirably greater than or equal to 0.03 mass% and less than or equal to 0.6 mass%.

The negative electrode mixture layer 41 may contain a conductive agent other than the first conductive agent and the second conductive agent. Examples of a conductive agent other than the first conductive agent and the second conductive agent include, for example, a conductive agent having the G/D ratio of greater than or equal to 65. From the viewpoint of making the advantageous effects of the present disclosure more significant, the total (W1+W2) of the mass of the first conductive agent (W1) and the mass of the second conductive agent (W2) is desirably greater than or equal to 90 mass% with respect to a total mass of the conductive agents contained in the negative electrode mixture layer 41, and is more desirably greater than or equal to 95 mass%.

Each of the first conductive agent and the second conductive agent desirably has one or more functional groups (hereinafter referred to as "acidic functional group") selected from the group consisting of a carboxy group, a sulfo group, and a hydroxy group. In this case, gravity acts between the acidic functional group and the negative electrode active material, which suppresses the isolation of the Si-containing material due to charging and discharging, resulting in further improvement of the charge/discharge cycle characteristics of the battery. An amount of the acidic functional group in the first conductive agent and the second conductive agent is, for example, greater than or equal to 0.01 mmol/g and less than or equal to 0.25 mmol/g.

No particular limitation is imposed on the method of introducing the acidic functional group to the conductive agent, and, for example, the acidic functional group can be introduced to the conductive agent by adding the conductive agent to a mixture acid of sulfuric acid and nitric acid, and letting reactions to occur for a predetermined time period. Desirably, the mixture acid is stirred during the reactions. No particular limitation is imposed on the reaction time period, and, for example, the reaction time period is desirably longer than or equal to 1 hour. Further, no particular limitation is imposed on a reaction temperature, and the reaction temperature is desirably higher than or equal to 20°C and lower than or equal to 45°C.

The acidic functional group introduced to the conductive agent can be analyzed by TPD-MS (thermal desorption spectroscopy). Measurement conditions are, for example, as follows.

Measurement apparatus: Gas chromatograph mass spectrometer (GC part: 7890 manufactured by Agile Technolories; MS part: MS-60030BU)
Temperature condition: Increase in temperature from 100°C to 1000°C at a rate of 20°C/min, and temperature held for 10 minutes
Carrier gas: Helium
Flow rate: 50 mL/min
Measurement mass number: m/z=greater than or equal to 10 and less than or equal to 600

A fiber length of the first conductive agent is desirably greater than or equal to 0.5 μm, is more desirably greater than or equal to 1.0 μm, and is further desirably greater than or equal to 2.0 μm. When the fiber length of the first conductive agent is greater than or equal to 0.5 μm, a relatively long electrically conductive path can be formed between the negative electrode active materials. From the viewpoint of the productivity, the fiber length of the first conductive agent is desirably less than or equal to 500 μm, is more desirably less than or equal to 450 μm, and is further desirably less than or equal to 400 μm. Thus, the fiber length of the first conductive agent is desirably greater than or equal to 0.5 μm and less than or equal to 500 μm, is more desirably greater than or equal to 1.0 μm and less than or equal to 450 μm, and is further desirably greater than or equal to 2.0 μm and less than or equal to 400 μm. The fiber length of the first conductive agent can be determined by measuring lengths of 50 arbitrary carbon nanotubes 50 with a field emission scanning electron microscope (FESEM), and calculating an arithmetic average. A similar measurement method may be employed for a fiber length of the second conductive agent.

The fiber length of the second conductive agent is desirably greater than or equal to 0.2 μm, is more desirably

greater than or equal to 0.5 μm, and is further desirably greater than or equal to 1.0 μm. When the fiber length of the first conductive agent is greater than or equal to 0.2 μm, a relatively long electrically conductive path can be formed between the negative electrode active materials. In addition, the fiber length of the second conductive agent is desirably less than or equal to 30 μm, is more desirably less than or equal to 25 μm, and is further desirably less than or equal to 20 μm. When the fiber length of the second conductive agent exceeds 30 μm, the contact area between the second conductive agent and the negative electrode active material tends to be reduced, and it may become difficult to form a strong electrically conductive path between the negative electrode active materials. Thus, the fiber length of the second conductive agent is desirably greater than or equal to 0.2 μm and less than or equal to 30 μm, is more desirably greater than or equal to 0.5 μm and less than or equal to 25 μm, and is further desirably greater than or equal to 1.0 μm and less than or equal to 20 μm.

A maximum outer diameter of the first conductive agent is desirably greater than or equal to 0.5 nm, is more desirably greater than or equal to 0.7 nm, and is further desirably greater than or equal to 1.0 nm. When the maximum outer diameter of the first conductive agent is less than 0.5 nm, the electrically conductive path formed by the first conductive agent may in some cases be easily cut due to the change of volume of the Si-containing material. Further, the maximum outer diameter of the first conductive agent is desirably less than 5.0 nm, is more desirably less than or equal to 4.5 nm, and is further desirably less than or equal to 4.0 nm. When the maximum outer diameter of the first conductive agent is less than 5.0 nm, the fiber length of the first conductive agent tends to be long, and a relatively long electrically path can be formed between the negative electrode active materials. Thus, the maximum outer diameter of the first conductive agent is desirably greater than or equal to 0.5 nm and less than 5.0 nm, is more desirably greater than or equal to 0.7 nm and less than or equal to 4.5 nm, and is further desirably greater than or equal to 1.0 nm and less than or equal to 4.0 nm. The maximum outer diameter of the first conductive agent can be determined by measuring outer diameters of 50 arbitrary carbon nanotubes with the field emission scanning electron microscope (FESEM) or a transmission electron microscope (TEM), and calculating an arithmetic average. A similar measurement method may be employed for a maximum outer diameter of the second conductive agent.

The maximum outer diameter of the second conductive agent is desirably greater than or equal to 5.0 nm, is more desirably greater than or equal to 6.0 nm, and is further desirably greater than or equal to 7.0 nm. When the maximum outer diameter of the second conductive agent is greater than or equal to 5.0 nm, the contact area between the second conductive agent and the negative electrode active material becomes large, and a strong electrically conductive path can be easily formed between the negative electrode active materials. In addition, the maximum outer diameter of the second conductive agent is desirably less than or equal to 20.0 nm, is more desirably less than or equal to 17.5 nm, and is further desirably less than or equal to 15.0 nm. When the maximum outer diameter of the second conductive agent exceeds 20.0 nm, the fiber length of the second conductive agent tends to excessively shortened, possibly resulting in difficulty in forming the electrically conductive path between the negative electrode active materials. Thus, the maximum outer diameter of the second conductive agent is desirably greater than or equal to 5.0 nm and less than or equal to 20.0 nm, is more desirably greater than or equal to 6.0 nm and less than or equal to 17.5 nm, and is further desirably greater than or equal to 7.0 nm and less than or equal to 15.0 nm.

The negative electrode mixture layer may further contain a binder. As the binder contained in the negative electrode mixture layer 41, for example, there may be exemplified styrene butadiene rubber (SBR), nitril-butadiene rubber (NBR), a fluororesin such as polytetrafluoroethylene (PTFE) and polyvinylidene fluoride (PVDF), polyacrylonitrile (PAN), a polyimide-based resin, an acrylic resin, a polyolefin-based resin, or the like. Of these, SBR and NBR are desirable, and SBR is particularly desirable. These materials may be used as a single material, or two or more of these materials may be used in combination. A content of the binder in the negative electrode mixture layer 41 is, for example, greater than or equal to 0.5 mass% and less than or equal to 5 mass% with respect to the total mass of the mixture layer 41.

The negative electrode mixture layer 41 may further contain a thickener. As the thickener, there may be exemplified, for example, carboxymethylcellulose (CMC) or a salt thereof (CMC-Na or the like), polyacrylic acid (PAA) or a salt thereof (PAA-Na, PAA-K, or the like, or a partially neutralized salt), polyethylene oxide (PEO), and polyvinyl alcohol (PVA). One of these thickeners may be used as a single material, or two or more of these thickeners may be used in combination. A content of the thickener in the negative electrode mixture layer 41 is, for example, greater than or equal to 0.5 mass% and less than or equal to 10 mass% with respect to the total mass of the negative electrode mixture layer 41.

[Separator]

For the separator 13, a porous sheet having ion permeability and an insulating property is employed. Specific examples of the porous sheet include a microporous thin film, a woven fabric, a non-woven fabric, or the like. As a material forming the separator 13, desirably, polyolefin such as polyethylene and polypropylene, cellulose, or the like is employed. The separator 13 may have a single-layer structure or a multilayer structure. On a surface of the separator 13, a resin layer of a high heat resistivity, such as an aramid resin or the like, may be formed.

A filler layer containing a filler of inorganic materials may be formed at an interface between the separator 13 and the positive electrode 11 and/or at an interface between the separator 13 and the negative electrode 12. As the filler of the

inorganic materials, there may be exemplified oxides containing a metal such as Ti, Al, Si, Mg, or the like, a phosphate compound, or the like. The filler layer can be formed by applying a slurry containing the filler on a surface of the positive electrode 11, the negative electrode 12, or the separator 13.

## EXAMPLES

The present disclosure will now be further described with reference to Examples, but the present disclosure is not limited to these Examples.

### <Example 1>

[Production of First Conductive Agent]

A single-walled carbon nanotube having a fiber length of 5 μm and a maximum outer diameter of 1.6 nm was introduced into a mixture acid of sulfuric acid/nitric acid, and a stirring process was performed at 40°C for 12 hours. After the process, the carbon nanotube was filtered with a glass filter, and the carbon nanotube remaining on the glass filter was washed with pure water and then naturally dried for one night. A sample after the drying process was analyzed through TPD-MS, and it was found that a sulfo group, a carboxyl group, and a hydroxyl group were present. The G/D ratio of the first conductive agent was measured through Raman spectroscopy, and was 40.

[Production of Second Conductive Agent]

A multi-walled carbon nanotube having a fiber length of 1 μm and a maximum outer diameter of 10 nm was introduced into a mixture acid of sulfuric acid/nitric acid, and a stirring process was performed at 40°C for 12 hours. After the process, the carbon nanotube was filtered with a glass filter, and the carbon nanotube remaining on the glass filter was washed with pure water and then naturally dried for one night. A sample after the drying process was analyzed by TPD-MS, and it was found that a sulfo group, a carboxyl group, and a hydroxyl group were present. The G/D ratio of the second conductive agent was measured through Raman spectroscopy, and was 10.

[Production of Negative Electrode]

Graphite particles including first graphite particles having a BET specific surface area of 4 $m^2/g$ and second graphite particles having a BET specific surface area of 6 $m^2/g$, and serving as a carbon material, and SiO serving as a Si-containing material were mixed with a mass ratio of 70:30, and the mixture was used as a negative electrode active material. The first conductive agent and the second conductive agent described above were mixed with a mass ratio of 100:1, and the mixture was used as a conductive agent. That is, a ratio (W2/W1) of a mass of the second conductive agent (W2) to a mass of the first conductive agent (W1) was 0.01. The negative electrode active material described above, the conductive agent described above, sodium carboxymethylcellulose, and styrene butadiene rubber were mixed with a mass ratio of 100:0.02:1.0:1.0. A suitable amount of water was added to this mixture and the mixture was then kneaded, to prepare a negative electrode mixture slurry. The negative electrode mixture slurry was applied on both surfaces of a negative electrode current collector formed from a copper foil having a thickness of 10 μm, and the applied film was dried. The dried applied film was rolled using a rolling roller, to produce a negative electrode in which the negative electrode mixture layers were formed on both surfaces of the negative electrode current collector.

[Preparation of Electrolyte Solution]

Ethylene carbonate (EC) and ethylmethyl carbonate (EMC) were mixed with a volume ratio of 30:70. $LiPF_6$ was dissolved in the mixture solvent in a concentration of 1.4 mol/L. Further, 2 mass% of vinylene carbonate (VC) with respect to the total amount of the electrolyte solution was dissolved. The resulting solution was used as the electrolyte solution of Examples.

[Production of Secondary Battery]

A separator formed from a polyethylene porous film was disposed between a metal Li and the negative electrode, and the resulting assembly was wound and shaped into a flat shape, to produce a wound type electrode assembly. The electrode assembly and the electrolyte solution described above were housed in a housing member formed from an aluminum laminated film, the inside of the housing member was depressurized, the electrolyte solution was impregnated into the separator, and an opening of the housing member was sealed, to produce a secondary battery.

[Evaluation of Capacity Maintenance Percentage]

Under a temperature environment of 25°C, the produced secondary battery was charged with a constant current (current: 0.1lt, termination voltage: 0.005V), and then was charged with a constant voltage (voltage: 0.005V, termination current: 0.01lt). Then, the secondary battery was discharged with a constant current (current: 0.1lt, termination voltage: 1.5V). With these charging and discharging as one cycle, 10 cycles were performed. With the following equation, a capacity maintenance percentage after the charge/discharge cycles of the secondary battery was calculated. A higher capacity maintenance percentage shows improved charge/discharge cycle characteristics.

Capacity maintenance percentage = (discharge capacity at 10th cycle)/(discharge capacity at 1st cycle)

[Evaluation of Viscosity of Slurry]

The viscosity of the negative electrode mixture slurry produced in the production of the negative electrode was measured with a viscosity measurement apparatus under the following conditions, and judgment with respect to influences of the viscosity on the applicability was made based on the measurement results under conditions (1) and (2). A case where there is no problem in the applied film and the slurry could be applied in a superior state was shown with a circle (○), a case where there is no problem in the applied film, but if the viscosity is further increased, it becomes not possible to apply the slurry in the superior state was shown with a triangle (Δ), and a case where there is a problem in the applied film and the slurry cannot be applied in the superior state was shown with an x (X). Viscosity measurement apparatus: TV-22 type viscometer manufactured by Toki Sangyo Number of rotations and measurement time: Condition (1): number of rotations: 2 rpm, time 60 seconds; Condition (2): number of rotations 20 rm, time: 60 seconds

<Example 2>

A test cell was produced in a manner similar to Example 1 except that, in the production of the negative electrode, the first conductive agent and the second conductive agent were mixed with a mass ratio of 90:10, and the mixture was used as the conductive agent, and the test cell was evaluated. That is, the ratio (W2/W1) of the mass of the second conductive agent (W2) to the mass of the first conductive agent (W1) was 0.11.

<Example 3>

A test cell was produced in a manner similar to Example 1 except that, in the production of the negative electrode, the first conductive agent and the second conductive agent were mixed with a mass ratio of 80:20, and the mixture was used as the conductive agent, and the test cell was evaluated. That is, the ratio (W2/W1) of the mass of the second conductive agent (W2) to the mass of the first conductive agent (W1) was 0.25.

<Example 4>

A test cell was produced in a manner similar to Example 1 except that, in the production of the negative electrode, the first conductive agent and the second conductive agent were mixed with a mass ratio of 70:30, and the mixture was used as the conductive agent, and the test cell was evaluated. That is, the ratio (W2/W1) of the mass of the second conductive agent (W2) to the mass of the first conductive agent (W1) was 0.43.

<Example 5>

A test cell was produced in a manner similar to Example 1 except that, in the production of the negative electrode, the first conductive agent and the second conductive agent were mixed with a mass ratio of 50:50, and the mixture was used as the conductive agent, and the test cell was evaluated. That is, the ratio (W2/W1) of the mass of the second conductive agent (W2) to the mass of the first conductive agent (W1) was 1.0.

<Example 6>

A test cell was produced in a manner similar to Example 1 except that, in the production of the negative electrode, the first conductive agent and the second conductive agent were mixed with a mass ratio of 120:1, and the mixture was used as the conductive agent, and the test cell was evaluated. That is, the ratio (W2/W1) of the mass of the second conductive agent (W2) to the mass of the first conductive agent (W1) was 0.008.

<Comparative Example 1>

A test cell was produced in a manner similar to Example except that, in the production of the negative electrode, only the first conductive agent was used as the conductive agent and the second conductive agent was not used, and the test cell was evaluated.

<Comparative Example 2>

A test cell was produced in a manner similar to Example 1 except that, in the production of the negative electrode, the first conductive agent and the second conductive agent were mixed with a mass ratio of 50:100, and the mixture was used as the conductive agent, and the test cell was evaluated. That is, the ratio (W2/W1) of the mass of the second conductive agent (W2) to the mass of the first conductive agent (W1) was 2.0.

<Comparative Example 3>

A test cell was produced in a manner similar to Example 1 except that, in the production of the negative electrode, only the second conductive agent was used as the conductive agent and the first conductive agent was not used, and the test cell was evaluated.

<Comparative Example 4>

A test cell was produced in a manner similar to Example 1 except that, in the production of the negative electrode, only the second conductive agent was used as the conductive agent and the content of the conductive agent in the negative electrode mixture layer was increased, and the test cell was evaluated. More specifically, the negative electrode active material, the second conductive agent, sodium carboxymethylcellulose, and styrene butadiene rubber were mixed with a mass ratio of 100:0.02:1.0:1.0.

Table 1 shows evaluation results of the capacity maintenance percentage and the viscosity of the slurry for the secondary batteries of Examples and Comparative Examples. The capacity maintenance percentages for the secondary batteries of Examples and Comparative Examples shown in Table 1 are relative values, with the capacity maintenance percentage of the secondary battery of Comparative Example 1 as having a value of 100.

[Table 1]

| | NEGATIVE ELECTRODE MIXTURE LAYER | EVALUATION RESULT | |
|---|---|---|---|
| | MASS RATIO OF CONDUCTIVE AGENTS (FIRST CONDUCTIVE AGENT: SECOND CONDUCTIVE AGENT) | CAPACITY MAINTENANCE PERCENTAGE (RELATIVE VALUE) | SLURRY VISCOSITY |
| EXAMPLE 1 | 100:1 | 102 | ○ |
| EXAMPLE 2 | 90:10 | 102 | ○ |
| EXAMPLE 3 | 80:20 | 102 | ○ |
| EXAMPLE 4 | 70:30 | 101 | ○ |
| EXAMPLE 5 | 50:50 | 101 | ○ |
| EXAMPLE 6 | 120:1 | 102 | × |
| COMPARATIVE EXAMPLE 1 | 100:0 | 100 | Δ |
| COMPARATIVE EXAMPLE 2 | 50:100 | 95 | ○ |
| COMPARATIVE EXAMPLE 3 | 0:100 | 95 | ○ |
| COMPARATIVE EXAMPLE 4 | 0:600 | 96 | × |

As shown in Table 1, the secondary batteries of Examples have improved capacity maintenance percentages in comparison to the secondary batteries of Comparative Examples. That is, the charge/discharge cycle characteristics can be improved by containing, as the negative electrode active material, the carbon material and the Si-containing material,

and using, as the conductive agent, a combination of the first conductive agent having the G/D ratio of greater than or equal to 20 and less than 65, and the second conductive agent having the G/D ratio of greater than or equal to 0.7 and less than 20. On the other hand, based on the results of Comparative Example 3 and Comparative Example 4, it can be understood that, when only the second conductive agent is used, even if the content of the second conductive agent is increased, the capacity maintenance percentage is not significantly improved. The reason for this can be deduced as because the electrically conductive path formed by the second conductive agent has a relatively short length, and tends to be easily cut due to the change of volume of the Si-containing material.

Further, in Example 6 in which the presence ratio of the first conductive agent is increased, the slurry viscosity becomes excessively large, and the slurry cannot be applied in a superior state. Based on this result, it can be understood that excessive increase of the presence ratio of the first conductive agent has a potential risk of reduction of the productivity, although the capacity maintenance percentage is improved.

The present disclosure is further described with the following embodiment.

Configuration 1: A negative electrode for a secondary battery, the negative electrode comprising: a negative electrode current collector; and a negative electrode mixture layer formed on a surface of the negative electrode current collector, wherein the negative electrode mixture layer contains, as a negative electrode active material, a carbon material and a Si-containing material, and the negative electrode mixture layer contains, as a conductive agent, a first conductive agent having a G/D ratio, obtained by Raman spectroscopy, of greater than or equal to 20 and less than 65, and a second conductive agent having a G/D ratio, obtained by the Raman spectroscopy, of greater than or equal to 0.7 and less than 20.

Configuration 2: The negative electrode for a secondary battery according to Configuration 1, wherein each of the first conductive agent and the second conductive agent is a carbon nanotube.

Configuration 3: The negative electrode for a secondary battery according to Configuration 1 or 2, wherein a ratio (W2/W1) of a mass of the second conductive agent (W2) to a mass of the first conductive agent (W1) is greater than or equal to 0.01 and less than 2.0.

Configuration 4: The negative electrode for a secondary battery according to any one of Configurations 1 to 3, wherein a total (W1+W2) of a mass of the first conductive agent (W1) and a mass of the second conductive agent (W2) is greater than or equal to 0.01 mass% and less than or equal to 0.8 mass% with respect to a total mass of the negative electrode mixture layer.

Configuration 5: The negative electrode for a secondary battery according to any one of Configurations 1 to 4, wherein each of the first conductive agent and the second conductive agent comprises one or more functional groups selected from the group consisting of a carboxy group, a sulfo group, and a hydroxy group.

Configuration 6: The negative electrode for a secondary battery according to Configuration 2, wherein a fiber length of the first conductive agent is greater than or equal to 0.5 $\mu$m and less than or equal to 500 $\mu$m.

Configuration 7: The negative electrode for a secondary battery according to Configuration 2, wherein a fiber length of the second conductive agent is greater than or equal to 0.2 $\mu$m and less than or equal to 30 $\mu$m.

Configuration 8: The negative electrode for a secondary battery according to Configuration 2, wherein a maximum outer diameter of the first conductive agent is greater than or equal to 0.5 nm and less than 5.0 nm.

Configuration 9: The negative electrode for a secondary battery according to Configuration 2, wherein a maximum outer diameter of the second conductive agent is greater than or equal to 5.0 nm and less than 20.0 nm.

Configuration 10: The negative electrode for a secondary battery according to any one of Configurations 1 to 9, wherein a content of the Si-containing material is greater than or equal to 10 mass% and less than or equal to 60 mass% with respect to a total mass of the negative electrode mixture layer.

Configuration 11: The negative electrode for a secondary battery according to any one of Configurations 1 to 10, wherein a ratio (V1/V2) of a volume of the Si-containing material in a charged state (V1) to a volume of the Si-containing material in a discharged state (V2) is greater than or equal to 1.5.

Configuration 12: The negative electrode for a secondary battery according to any one of Configurations 1 to 11, wherein the Si-containing material comprises an ion conductive phase and a Si phase dispersed in the ion conductive phase, and the ion conductive phase is at least one selected from the group consisting of a silicate phase, a carbon phase, a silicide phase, and a silicon oxide phase.

Configuration 13: The negative electrode for a secondary battery according to any one of Configurations 1 to 12, wherein the carbon material comprises a first carbon material and a second carbon material having BET specific surface areas which differ from each other, and the BET specific surface area of the first carbon material is greater than or equal to 0.9 $m^2/g$ and less than or equal to 6.5 $m^2/g$, and the BET specific surface area of the second carbon material is greater than 2.5 $m^2/g$ and less than or equal to 8.0 $m^2/g$.

Configuration 14: A secondary battery comprising: the negative electrode for a secondary battery according to any one of Configurations 1 to 13; a positive electrode; and an electrolyte.

REFERENCE SIGNS LIST

10 non-aqueous electrolyte secondary battery, 11 positive electrode, 12 negative electrode, 13 separator, 14 electrode assembly, 16 housing can, 17 sealing assembly, 18, 19 insulating plate, 20 positive electrode lead, 21 negative electrode lead, 22 groove portion, 23 internal terminal plate, 24 lower vent member, 25 insulating member, 26 upper vent member, 27 cap, 28 gasket, 30 positive electrode current collector, 31 positive electrode mixture layer, 40 negative electrode current collector, 41 negative electrode mixture layer.

## Claims

**1.** A negative electrode for a secondary battery, the negative electrode comprising:

a negative electrode current collector; and
a negative electrode mixture layer formed on a surface of the negative electrode current collector, wherein
the negative electrode mixture layer contains, as a negative electrode active material, a carbon material and a Si-containing material;
the negative electrode mixture layer contains, as a conductive agent, a first conductive agent having a G/D ratio, obtained by Raman spectroscopy, of greater than or equal to 20 and less than 65, and a second conductive agent having a G/D ratio, obtained by the Raman spectroscopy, of greater than or equal to 0.7 and less than 20, and
a ratio (W2/W1) of a mass of the second conductive agent (W2) to a mass of the first conductive agent (W1) is less than 2.0.

**2.** The negative electrode for a secondary battery according to claim 1, wherein each of the first conductive agent and the second conductive agent is a carbon nanotube.

**3.** The negative electrode for a secondary battery according to claim 1, wherein the ratio (W2/W1) of the mass of the second conductive agent (W2) to the mass of the first conductive agent (W1) is greater than or equal to 0.01 and less than 2.0.

**4.** The negative electrode for a secondary battery according to claim 1, wherein a total (W1+W2) of the mass of the first conductive agent (W1) and the mass of the second conductive agent (W2) is greater than or equal to 0.01 mass% and less than or equal to 0.8 mass% with respect to a total mass of the negative electrode mixture layer.

**5.** The negative electrode for a secondary battery according to claim 1, wherein each of the first conductive agent and the second conductive agent comprises one or more functional groups selected from the group consisting of a carboxy group, a sulfo group, and a hydroxy group.

**6.** The negative electrode for a secondary battery according to claim 2, wherein a fiber length of the first conductive agent is greater than or equal to 0.5 μm and less than or equal to 500 μm.

**7.** The negative electrode for a secondary battery according to claim 2, wherein a fiber length of the second conductive agent is greater than or equal to 0.2 μm and less than or equal to 30 μm.

**8.** The negative electrode for a secondary battery according to claim 2, wherein a maximum outer diameter of the first conductive agent is greater than or equal to 0.5 nm and less than 5.0 nm.

**9.** The negative electrode for a secondary battery according to claim 2, wherein a maximum outer diameter of the second conductive agent is greater than or equal to 5.0 nm and less than 20.0 nm.

**10.** The negative electrode for a secondary battery according to claim 1, wherein a content of the Si-containing material is greater than or equal to 10 mass% and less than or equal to 60 mass% with respect to a total mass of the negative electrode mixture layer.

**11.** The negative electrode for a secondary battery according to claim 1, wherein a ratio (V1/V2) of a volume of the Si-containing material in a charged state (V1) to a volume of the Si-containing material in a discharged state (V2) is greater than or equal to 1.5.

**12.** The negative electrode for a secondary battery according to claim 1, wherein

the Si-containing material comprises an ion conductive phase and a Si phase dispersed in the ion conductive phase, and
the ion conductive phase is at least one selected from the group consisting of a silicate phase, a carbon phase, a silicide phase, and a silicon oxide phase.

**13.** The negative electrode for a secondary battery according to claim 1, wherein

the carbon material comprises a first carbon material and a second carbon material having BET specific surface areas which differ from each other, and
the BET specific surface area of the first carbon material is greater than or equal to 0.9 $m^2/g$ and less than or equal to 6.5 $m^2/g$, and the BET specific surface area of the second carbon material is greater than 2.5 $m^2/g$ and less than or equal to 8.0 $m^2/g$.

**14.** A secondary battery comprising:

the negative electrode for a secondary battery according to any one of claims 1 to 13;
a positive electrode and
an electrolyte.

Figure 1

10
17
27
26
23
24
25
16
28
20
22
18
12
11
41
40
41
31
30
31
13
13
11
12
13
14
19
21

# INTERNATIONAL SEARCH REPORT

International application No.
**PCT/JP2024/034582**

**A. CLASSIFICATION OF SUBJECT MATTER**

***H01M 4/62***(2006.01)i; ***H01M 4/36***(2006.01)i; ***H01M 4/38***(2006.01)i; ***H01M 4/133***(2010.01)i; ***H01M 4/134***(2010.01)i; ***H01M 4/587***(2010.01)i
FI: H01M4/62 Z; H01M4/133; H01M4/134; H01M4/36 B; H01M4/36 E; H01M4/38 Z; H01M4/587

According to International Patent Classification (IPC) or to both national classification and IPC

**B. FIELDS SEARCHED**

Minimum documentation searched (classification system followed by classification symbols)

H01M4/62; H01M4/36; H01M4/38; H01M4/133; H01M4/134; H01M4/587

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X<br><br>A | JP 2022-79409 A (TOYO INK SC HOLDINGS CO., LTD.) 26 May 2022 (2022-05-26) paragraphs [0038], [0126]-[0162], table 1, CNT, B, E, table 4, comparative example 3, table 9, comparative example 9 | 1-12, 14<br><br>13 |
| A | JP 2015-135770 A (KABUSHIKI KAISHA TOSHIBA) 27 July 2015 (2015-07-27) | 1-14 |
| A | CN 109728300 A (NINGBO SHANYUAN GRAPHENE TECHNOLOGY CO., LTD.) 07 May 2019 (2019-05-07) | 1-14 |
| A | US 2013/0248772 A1 (JO, Hyunuk) 26 September 2013 (2013-09-26) | 1-14 |

☐ Further documents are listed in the continuation of Box C. ☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **25 November 2024** | **10 December 2024** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (July 2022)

**INTERNATIONAL SEARCH REPORT**
**Information on patent family members**

International application No.
**PCT/JP2024/034582**

| Patent document cited in search report | Publication date (day/month/year) | Patent family member(s) | Publication date (day/month/year) |
|---|---|---|---|
| JP 2022-79409 A | 26 May 2022 | US 2023/0307642 A1 paragraphs [0051], [0149]-[0176], table 1, CNT, B, E, table 4, comparative example 3, table 9, comparative example 9 | |
| | | WO 2022/102727 A1 | |
| | | EP 4246616 A1 | |
| | | CN 115997301 A | |
| | | KR 10-2023-0107202 A | |
| JP 2015-135770 A | 27 July 2015 | (Family: none) | |
| CN 109728300 A | 07 May 2019 | (Family: none) | |
| US 2013/0248772 A1 | 26 September 2013 | KR 10-2013-0108816 A | |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- WO 2017007013 A